# EUROPÄISCHE PATENTSCHRIFT

(11) **EP 1 279 379 B1**
(45) Veröffentlichungstag und Bekanntmachung des Hinweises auf die Patenterteilung: **14.06.2006**
(21) Anmeldenummer: 01118143.5
(22) Anmeldetag: 26.07.2001
(51) Int. Cl.: A61C 9/00, B05C 17/01

(54) **Verfahren und Vorrichtung zum Erzeugen einer Mehrkomponentenmasse**
Method and device for obtaining a multicomponent mass, especially for dental purposes
Méthode et dispositif destinés à l'obtention d'une masse à plusieurs composantes, en particulier pour des applications dentaires

(43) Veröffentlichungstag der Anmeldung: 29.01.2003
(73) Patentinhaber: Ernst Mühlbauer GmbH & Co.KG, 25870 Norderfriedrichskoog (DE)
(72) Erfinder: Heymann, Rudolf, 21502 Geesthacht (DE); Röbel, Frauke, 22419 Hamburg (DE); Hörth, Hans, 21147 Hamburg (DE)
(74) Vertreter: Glawe, Delfs, Moll

(56) Entgegenhaltungen:
- EP-A- 1 010 401
- US-A- 4 341 327
- US-A- 4 493 286
- US-A- 6 126 039

## Beschreibung

Die Erfindung betrifft ein Verfahren und eine Vorrichtung zum Erzeugen einer Mehrkomponentenmasse, insbesondere für Dentalzwecke, durch Auspressen ihrer Komponenten aus nebeneinander angeordneten austauschbaren Kartuschen, die in einem Mischer münden, durch gemeinsamen Vorschub ihrer Kolben mittels eines Elektroantriebs, bei dem *Messwerte des Auspressverhaltens mit Sensoren bestimmt werden und* die Vorschubgeschwindigkeit geregelt wird.

Bei einem bekannten Verfahren und einer bekannten Vorrichtung (EP 1 010 401 A1) findet zunächst schneller Vorschub der Kolben statt. Findet dann Berührung mit den Komponenten statt, so erhöht sich der Widerstand, was detektiert wird. Anschließend wird dann die vorschubgeschwindigkeit auf einen niedrigeren konstanten Wert geregelt, um sicher zu stellen, daß die Komponenten mit gleichförmiger Geschwindigkeit ausgepreßt werden. Es hat sich nun aber herausgestellt, daß es in vielen Fällen nicht ausreicht, die Vorschubgeschwindigkeit auf einen konstanten Wert zu regeln, vielmehr muß dabei auch noch die geeignete Vorschubgeschwindigkeit gewählt werden. Dies kann der Zahnarzt zwar durch Einstellung an vorbekannten Geräten erreichen. Es wird ihm aber in den meisten Fällen nicht gelingen, die optimale Vorschubgeschwindigkeit einzustellen. Unterschiedliche Materialtypen haben unterschiedlichste Viskositäten oder benötigen verarbeitungsbedingt spezielle Geschwindigkeiten. Mit einer universellen Abstimmung ist der Vielzahl der Materialtypen nicht genügend Rechnung getragen. Je nach Eigenschaften des Materials gibt es einen optimalen Vorschub und ein gutes und reproduzierbares Ergebnis der Arbeit. Dies gilt um so mehr, wenn kein statischer Mischer, sondern ein dynamischer Mischer für die beiden zusammen geführten Komponenten verwendet wird, der von einem Elektromotor angetrieben wird. Auch die Drehzahl dieses Elektromotors muß dann den speziellen Eigenschaften der Komponenten angepaßt werden, damit die Mehrkomponentenmasse die optimalen Eigenschaften hat.

Ist der Vorschub und/oder die Drehzahl des Mischermotors nicht optimal eingestellt, so können folgende Probleme auftreten.
1. Ein unangepaßtes Verhältnis der Drehzahlen von Vorschub und Mischwelle ergibt eine nicht optimale Vermischung der Komponenten. Somit werden Vorgaben wie Verarbeitungszeiten und Festigkeiten der Abformung nur teilweise oder schlecht erreicht.
2. Je nach Viskosität des Materialtypus kann durch falsche Drehzahl der Mischwelle eine ungewollt hohe Scherung erzeugt werden, die das Abbindeverhalten der Massen unkontrolliert ansteigen läßt.
3. Sind die Komponenten in ihrem Fließverhalten unterschiedlich, werden durch eine starre Drehzahl Fehlmengen gespendet. Diese führen zu Teilerhärtung oder Verzögerungen der Abformung. Dies läßt sich durch Anfahr- und Stoprampen ausgleichen oder erheblich verbessern.
4. Werden Massen zu schnell gespendet, ist mit einer Verformung der Druckbehälter oder Kartuschen zu rechnen. Die Verformung führt hierbei zur Veränderung der Volumen und somit zur Fehldosierung der Komponenten. Dies ist um so problematischer, wenn z.B. ein Behälter sich stärker verformt als die zweite Komponente. Der Fehler kann die mechanischen Werte der Abformung beeinträchtigen als auch zu Teilaushärtung führen.
5. Werden Massen verwendet, die präzise und wohldosiert plaziert werden müssen, ist eine ideale Spendegeschwindigkeit hilfreich. Hierdurch werden Lufteinschlüsse und Überdosierungen vermieden.

*Bei einer Vorrichtung der eingangs genannten Art (US 6,126,039) sind Sensoren vorgesehen, mit Hilfe derer durch Rückkopplung sichergestellt wird, dass die Austrittsgeschwindigkeiten proportional zur Umdrehungsgeschwindigkeit der Pumpe sind. Dies geschieht, ohne dass die Viskosität der Materialien berücksichtigt wird.*

Die Aufgabe der Erfindung besteht in der Schaffung eines Verfahrens und einer Vorrichtung, mit der automatisch die Vorschubgeschwindigkeit auf einen für das entsprechende Material gut geeigneten Wert geregelt wird. Die erfindungsgemäße Lösung besteht darin, daß die Regelung der Vorschubgeschwindigkeit in Abhängigkeit vom Auspreßverhalten der Komponenten, das mit gespeicherten oder berechneten Werten für bekannte Materialien verglichen wird, erfolgt.

Es wird also das Auspreßverhalten gemessen. Tritt z.B. beim Auspressen nur ein verhältnismäßig geringer Widerstand auf, so handelt es sich offensichtlich um Komponenten mit geringer Viskosität, was schon Rückschlüsse auf das verwendete Material erlaubt, wenn der gemessene Auspreßdruck bzw. die Kraft mit gespeicherten Werten von verschiedenen Materialien verglichen wird. Die Vorschubgeschwindigkeit kann dann, nachdem das Material so identifiziert worden ist, auf den optimalen Wert für dieses Material eingestellt werden. Die Kraft oder der Druck, der zum Auspressen erforderlich ist, kann dabei über die Stromaufnahme oder das Drehmoment des Elektroantriebs für den Vorschub gemessen werden.

Bei einer vorteilhaften Ausführungsform wird der Auspreßdruck einer oder aller Komponenten gemessen. Statt des Drucks kann natürlich bei bekanntem Querschnitt der Kolben auch die Auspreßkraft gemessen werden. Diese Auspreßkraft ist stark materialabhängig. Die Auspreßkraft bei einem bestimmten Gerät ist z.B. für das Material Honigum bei der Basiskomponente 283 N und bei der Katalysatorkomponente 1124 N. Beim Material Silagum sind diese Kräfte bei der Basiskomponente 1014 N und bei der Katalysatorkomponente 1234 N. Werden diese Kräfte gemessen und mit den gespeicherten Werte für diese Materialien verglichen, so kann automatisch festgestellt werden, welches Material verarbeitet werden soll, so daß die Vorschubgeschwindigkeit und auch ggf. die Mischgeschwindigkeit entsprechend optimal eingeregelt werden können.

Wird die Vorschubgeschwindigkeit zusammen mit der Stromaufnahme oder dem Drehmoment des Elektroantriebs für den Vorschub gemessen, so können daraus Werte für die Fließfähigkeit der Materialien bestimmt werden, die ebenfalls mit bekannten gespeicherten Werten verglichen und zur Regelung herangezogen werden können.

Andererseits kann die Verformung einer oder aller Kartuschen oder aber die Verformung der Kartuschenaufnahme gemessen werden, was ebenfalls Aussagen über das Fließverhalten erlaubt und dadurch zur Identifizierung des verwendeten Materials und optimalen Regelung herangezogen werden kann.

Ist ein mit einem Elektromotor angetriebener Mischer vorgesehen, so kann die Stromaufnahme oder das Drehmoment des Elektromotors gemessen werden, was ebenfalls Aussagen über die Viskosität des Materials und damit durch Vergleich mit gespeicherten Werten darüber erlaubt, um welches Material es sich handelt. Die Umdrehungsgeschwindigkeit für den Elektromotor des Mischers kann dann ebenfalls auf einen geeigneten Wert geregelt werden.

Die Viskosität oder Fließfähigkeit der Materialien hängt häufig kritisch von der Temperatur ab. Es wird daher vorteilhafterweise vorgesehen, daß auch die Temperatur gemessen wird, und zwar entweder die Temperatur der Komponenten vor dem Mischen oder aber die Temperatur im Mischer. Durch Messung des Auspreßverhaltens und Vergleich mit bekannten Auspreßdaten kann also das Material, das verwendet wird, identifiziert werden und die Auspreßgeschwindigkeit und ggf. die Umdrehungszahl des Mischermotors optimal eingestellt werden. Durch das erfindungsgemäße Verfahren und die erfindungsgemäße Vorrichtung können dabei auch Übergänge von einem Verhalten zu einem anderen festgestellt, verglichen und zum Regeln herangezogen werden, wie z.B. die Thixotropie-Kennlinie. Die Messungen können dabei nicht nur zur Regelung herangezogen werden, sondern können auch dazu dienen, Überlastung zu vermeiden. Zusätzlich kann auch die Möglichkeit vorgesehen werden, daß der Zahnarzt eine Geschwindigkeit einstellt, die er selbst für optimal hält. Stimmt diese nicht mit der optimalen Vorschubgeschwindigkeit überein, die vom Gerät festgestellt wurde, so kann entweder eine Warnanzeigen erfolgen oder aber ein "Kompromiß" zwischen der eingestellten Geschwindigkeit und der automatisch bestimmten Geschwindigkeit gewählt werden.

Die Regelung der Umdrehungsgeschwindigkeit für den Vorschubmotor und ggf. für den Mischermotor erfolgt nach bekannten Techniken. Vorzugsweise werden Gleichstrommotoren mit einem Spannungsbereich von 12 bis 24 Volt verwendet, deren Drehzahl von der Spannung abhängig ist. Die Motoren können auch durch eine Pulsbreitenmodulation in ihrer Drehzahl beeinflußt werden, wobei das Drehmoment weitgehend konstant bleibt. Die Erfindung wird im folgenden anhand von vorteilhaften Ausführungsformen unter Bezugnahme auf die beigefügten Zeichnungen beschrieben. Es zeigen:
- Fig. 1: in perspektivischer Ansicht im geöffneten Zustand ein vorbekanntes Gerät;
- Fig. 2: ein Gerät der in Fig. 1 gezeigten Art, bei dem erfindungsgemäß Meßeinrichtungen vorgesehen sind, die bei III bis VIII detaillierter dargestellt sind; und
- Fig. 3 bis 8: die Teildarstellungen III bis VIII von Fig. 2 im vergrößerten Maßstab.

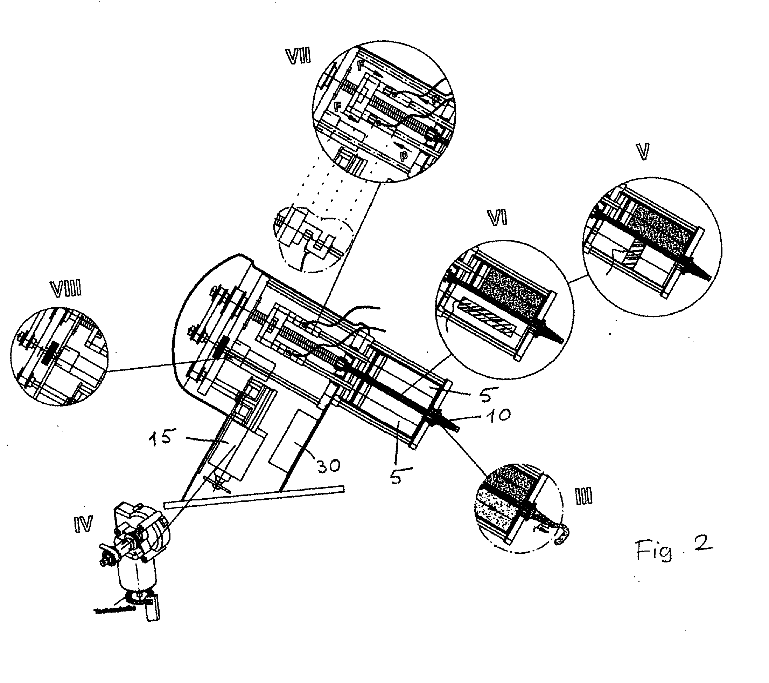

Es soll zunächst im Zusammenhang mit Fig. 1 ein bekanntes Gerät (EP 1 010 401 A1) beschrieben werden, bei dem die Erfindung Anwendung finden kann.

Von einem Fußteil 1 erheben sich Trägerplatten 2, 3. An letzterer ist eine Halterung 4 für strichpunktiert angedeutete Kartuschen 5 vorgesehen. Es spielt in diesem Zusammenhang keine Rolle, ob die Kartuschen, die vorzugsweise zylindrisch ausgebildet sind, unmittelbar mit den Komponenten befüllt sind oder einen ggf. auswechselbaren, die Komponente enthaltenden Schlauchbeutel aufnehmen.

Die Halterung 4 umfaßt eine hintere Halterungsplatte 6 und eine vordere Halterungsplatte 7, die durch Anker 8 zusammengehalten sind. Die Kartuschen 5 können dazwischen passend eingesetzt werden. Es können weitere, nicht gezeigte Halterungsmittel vorgesehen sein, die ihre seitliche Positionierung bewirken.

An der vorderen Halterungsplatte 7 ist eine nicht dargestellte Einrichtung zum Anbringen einer strichpunktiert angedeuteten Mischdüse 10 vorgesehen. Diese weist an ihrem der Halterungsplatte 7 zugewendeten Ende zwei Einlaßöffnungen auf, die in bekannter Weise mit den Auslaßöffnungen der Kartuschen 5 direkt oder indirekt kommunizieren. Das Merkmal, daß die Kartuschen nebeneinander angeordnet sind, soll nur besagen, daß sie so angeordnet sind, daß sie gleichzeitig und synchron betätigt werden können. Eine darüber hinausgehende Positionsbeschränkung, beispielsweise auf parallele Anordnung, ist damit nicht beabsichtigt, obwohl diese offensichtlich vorteilhaft ist.

Die Kartuschen 5 enthalten Kolben. Diese können ggf. dann entfallen, wenn die Kartuschen Folienbeutel enthalten. Die Stempel treten dann an die Stelle der im Anspruch genannten Kolben. Für den Vorschub der Kolben bzw. der hinteren Beutelstirnfläche sind in dem Gerät Stempel 11 vorgesehen, die in der Zeichnung in dem Zustand gezeigt sind, in welchem sie zum Zwecke des Kartuschenaustauschs in die hintere Halterungsplatte 6 zurückgezogen sind. Sie sind am vorderen Ende von Stempelstangen 12 angeordnet, deren hintere Enden starr in einem Querriegel 13 befestigt sind, der mittels einer Gewindespindel 14 in Richtung zur Mischdüse vorgeschoben oder in Gegenrichtung zurückgezogen werden kann. Die Stempel 11 können ggf. ausgetauscht werden, wenn Kartuschen unterschiedlichen Durchmessers einzusetzen sind. Auch ihr Abstand voneinander kann veränderbar sein. Wenn die Kartuschen 5 in das Gerät eingelegt sind, werden die Stempel 11 durch Vorschub des Querriegels 13 vorgeschoben, bis sie die Kolben in den Kartuschen 5 erreichen. Diese Vorschubbewegung kann automatisch durch das Einlegen der Kartuschen oder manuell durch das Einschalten des Geräts ausgelöst werden.

Für den Vorschub und Rückzugsantrieb der Gewindespindel 14 ist ein Motor 15 mit Getriebe 16 vorgesehen, dessen Antriebsbewegung durch einen Riementrieb 17 auf die Gewindespindel 14 übertragen wird. Für die Lagerung der Gewindespindel 14 und der zum Riementrieb 17 gehörigen Ringscheiben sind nicht dargestellte Einrichtungen vorgesehen, die an der Platte 3 und einer weiteren Gestellplatte 20 angeordnet sind, die über Säulen 21 starr mit der Platte 3 verbunden ist.

Ein weiterer Motor 22 ist an der Platte 20 angeordnet und in nicht gezeigter Weise antriebsmäßig verbunden mit einer Mischerantriebswelle 23, die zwischen den Platten 3 und 20 koaxial innerhalb der Gewindespindel 14 liegt, zwischen den Kartuschen 5 von der hinteren Halterungsplatte 6 zur vorderen Halterungsplatte 7 geführt und in dieser gelagert ist. Sie schaut aus der vorderen Halterungsplatte 7 in Form eines Ansatzes 24 heraus, der zum Zwecke der Drehverbindung mit der nicht gezeigten Mischerwelle beispielsweise mehrkantig (nicht gezeigt) ausgebildet ist. Der Wellenansatz 24 kann gegen Federkraft zurückgeschoben werden, bis er nicht mehr aus der vorderen Halterungsplatte 7 herausschaut. Es kann auch vorgesehen sein, daß dann, wenn die Stempel 11 zum Zwecke des Kartuschenaustausches gänzlich zurückgezogen sind, er gleichfalls in die vordere Halterungsplatte 7 zurückgezogen ist, um das Ansetzen einer neuen Mischerdüse 10 zu erleichtern.

Es ist eine bei 30 schematisch angedeutete elektronische Einheit 30 vorgesehen. Die erste Funktion dieser elektronischen Einheit besteht darin, die Drehzahl des Motors dann, wenn er sich im Auspreßbetrieb unter Last befindet, auf einem vorbestimmten Wert konstant zu regeln . Dies ist die Funktion, die das konstante Mischergebnis sichert.

Eine zweite Funktion der elektronischen Einheit 30 besteht darin, durch Messung der Stromaufnahme des Motors 15 festzustellen, ob er sich unter Last befindet oder nicht. Im ersteren Fall ist anzunehmen, daß die Stempel 11 sich in Anlage an den Zylindern der Kartuschen 5 befinden und der Auspreßwiderstand der Kartuschen die von der Einheit 30 gemessene hohe Stromaufnahme veranlaßt. In diesem Fall sorgt die elektronische Einheit 30 dafür, daß der Motor 15 mit der vorbestimmten Vorschubgeschwindigkeit betrieben wird.

Stellt die elektronische Einheit hingegen fest, daß die Stromaufnahme unterhalb eines Wertes liegt, der normalerweise nur dann erreicht wird, wenn der Antrieb unter Last ist, sorgt sie dafür, daß der Motor 15 mit höherer (beispielsweise der zehnfachen) Geschwindigkeit betrieben wird. Dies gilt unabhängig von der Drehrichtung des Motors 15.

Drittens sorgt die elektronische Einheit 30 dafür, daß der Motor 22 mit hoher Mischgeschwindigkeit betrieben wird, wenn sich der Antrieb 15 unter Last befindet. Umgekehrt sorgt sie dafür, daß der Motor 22 mit wesentlich geringerer (beispielsweise mit einem Zehntel oder Zwanzigstel der Mischgeschwindigkeit) betrieben wird, wenn der Motor 15 im Vorwärtslauf nicht unter Last ist. Beim Rücklauf wird der Antrieb des Mischers automatisch gestoppt.

Ein (nicht gezeigter) Sensor ist so angeordnet, daß er dann anspricht, wenn die Vorschubstempel 11 ihre am weitesten vorgeschobene Stellung erreichen, die der vollständigen Entleerung der Kartuschen 5 zugeordnet ist. Wenn der Sensor in dieser Stellung anspricht, veranlaßt er die elektronische Einheit 30 dazu, die Drehrichtung des Motors 15 umzukehren, so daß die Stempel 11 aus den Kartuschen zurückgezogen werden, und zwar im Eilgang, weil sie sich dabei nicht unter Last befinden. Ein zweiter Sensor (nicht gezeigt) stellt fest, wann die Stempel 11 ihre in der Figur dargestellte, vollständig zurückgezogene Position erreicht haben. Er veranlaßt dann den Motor 15 zu stoppen. Der Rückzug der Stempel 11 kann auch manuell durch einen (nicht gezeigten) Schalter ausgelöst werden, wenn Kartuschen ausgetauscht werden sollen, bevor sie entleert sind.

Wenn die Stempel 11 zurückgezogen sind, können die Kartuschen 5 ausgetauscht werden. Selbsttätig nach dem Einlegen der neuen Kartuschen oder durch manuelle Veranlassung wird der Motor 15 wieder eingeschaltet. Da die Stempel 11 sich zunächst nicht unter Last befinden, laufen sie im Eilgang vor, bis sie die Kolben der Kartuschen 5 erreichen. Die Stromaufnahme steigt dann an, und die elektronische Einheit 30 schaltet den Motor 15 auf seine niedrige, konstant zu haltende Drehgeschwindigkeit um.

Wenn die Stempel 11 zurückgezogen sind, ist zweckmäßigerweise auch der Ansatz 24 der Mischerantriebswelle 23 zurückgezogen, so daß die Mischdüse 10 leicht ausgewechselt werden kann. Wenn nach dem Austausch der Kartuschen der Stempelvorschub 11 beginnt, wird auch der Motor 22 wieder in Gang gesetzt, und zwar zunächst mit geringer Geschwindigkeit, solange die elektronische Einheit 30 noch keinen Lastzustand feststellt. Der Wellenansatz 24 der Mischerantriebswelle 23 hat dann genügend Zeit, die zutreffende Einraststellung im Verhältnis zu dem Kupplungsteil der Mischerwelle zu finden und aufgrund des auf ihn lastenden Federdrucks in die Kupplungsstellung einzurükken. Erst wenn die Stempel 11 die Kolben der Kartuschen 5 erreicht haben und die elektronische Einheit 30 demzufolge den Lastzustand feststellt, wird der Motor 22 auf die hohe Drehzahl beschleunigt, die dem Mischerbetrieb zugeordnet ist. Zum Ende einer Applikation wird der Vorlauf per Knopfdruck gestoppt, dadurch wird gleichzeitig ein geringer Rücklauf des Motors 15 ausgelöst, der eine Entlastung des Systems gewährleistet.

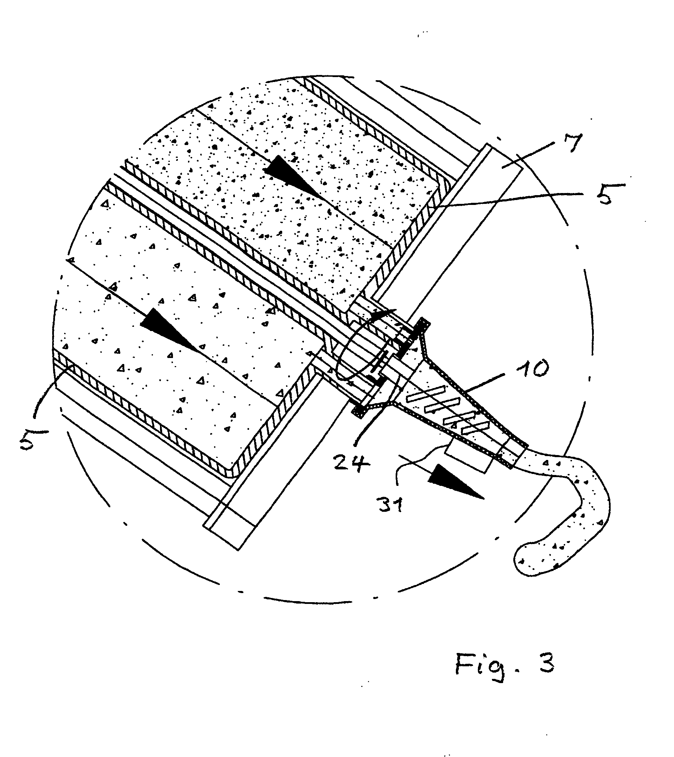

In Fig. 2 ist ein Gerät gezeigt, das erfindungsgemäß mit Sensoren bestückt ist. Es ist dabei eine größere Anzahl von Sensoren dargestellt, was aber nicht bedeutet, daß alle Sensoren immer vorhanden sein müssen. Diese Sensoren sind vielmehr nur der Übersichtlichkeit halber in einer einzigen Zeichnung dargestellt. Die Einzelheiten der mit III bis VIII dargestellten Sensoranordnungen sind in den Fig. 3 bis 8 im größeren Maßstab dargestellt. Entscheidend ist aber die zentrale Elektronikeinheit 30, in der Daten über das Auspreßverhalten von bekannten Komponenten gespeichert sind, die diese gespeicherten Daten mit gemessenen Daten vergleicht, ggf. auch noch Berechnungen zur Berücksichtigung unterschiedlicher Parameter durchführt und dann die Geschwindigkeit des Vorschubmotors und/oder des Mischermotors auf einem günstigen Weg regelt.

In Fig. 3 ist ein Thermoelement 31 gezeigt, das an der Außenwand der Mischerdüse 10 angebracht ist und dabei die Temperatur der Mehrkomponentenmasse mißt.

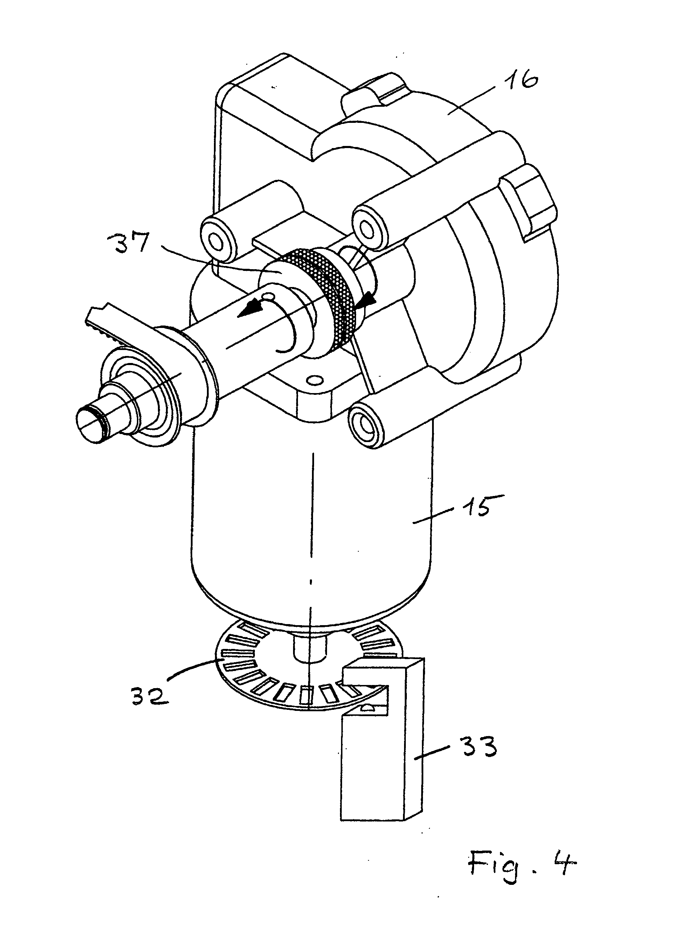

In Fig. 4 ist eine Tachoscheibe 32 mit Schlitzen und eine Lichtschranke 33 gezeigt, mit denen die Umdrehungsgeschwindigkeit des Vorschubmotors 15 gemessen werden. Ferner dargestellt ist eine Drehmomentmeßzelle 37 zur Messung des von dem Vorschubmotor 15 aufgebrachten Antriebsmoments.

In Fig. 5 ist ein Dehnungsmeßstreifen 34 gezeigt, der sich radial um die Kartusche 5 erstreckt, um die Verformung der Kartusche in Umfangsrichtung zu messen.

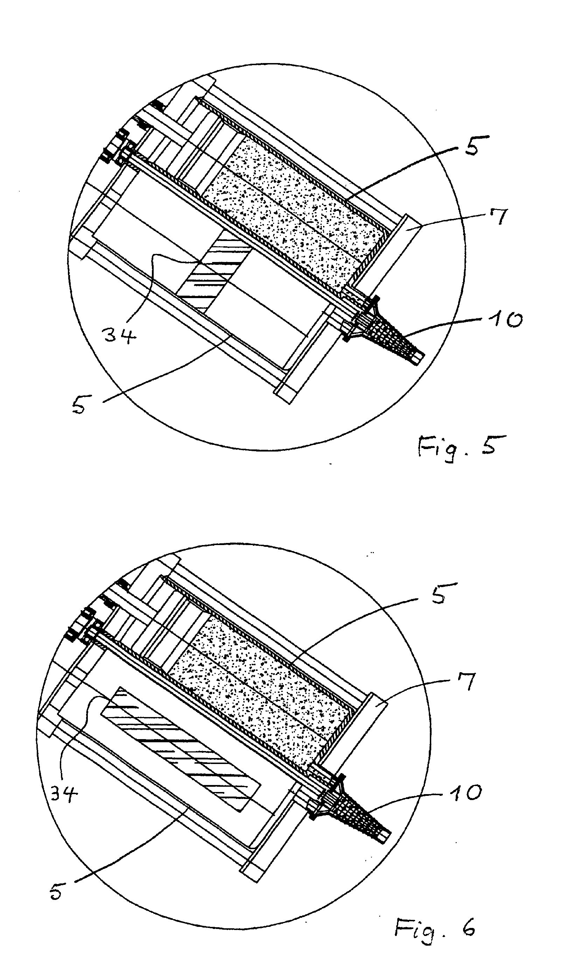

In Fig. 6 ist der Dehnungsstreifen 34 in Axialrichtung angebracht, um in dieser Richtung die Dehnung zu messen.

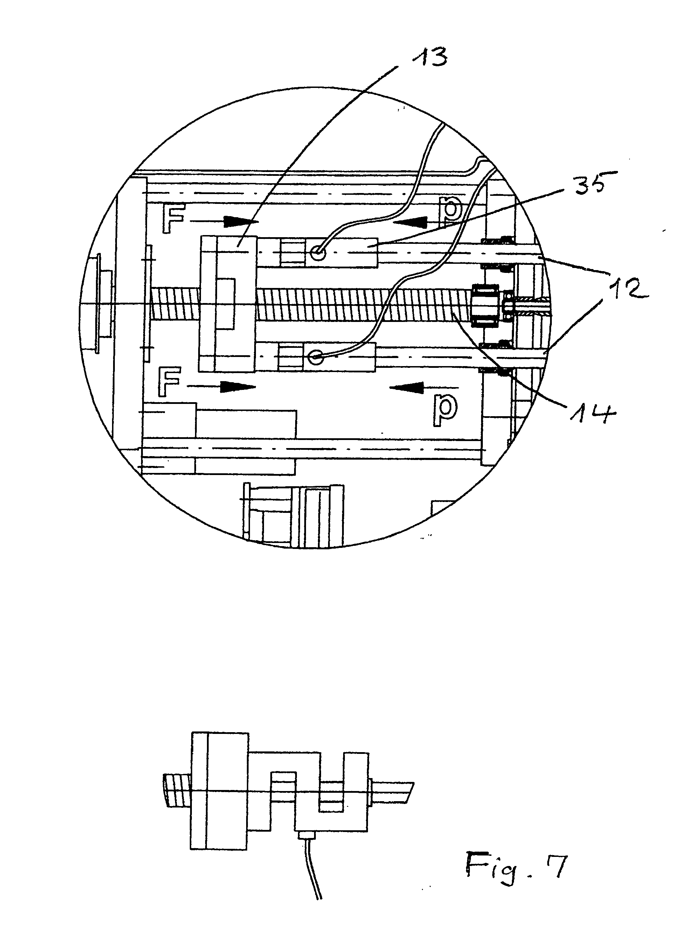

In Fig. 7 sind Druckmeßzellen 35 dargestellt, die den Druck messen, mit dem die Stempel 11 über die Stempelstangen 12 beaufschlagt werden. Im unteren Teil der Fig. 7 ist dabei eine Ansicht von der Seite parallel zur Ebene der Darstellung des oberen Teils der Fig. 7 gezeigt.

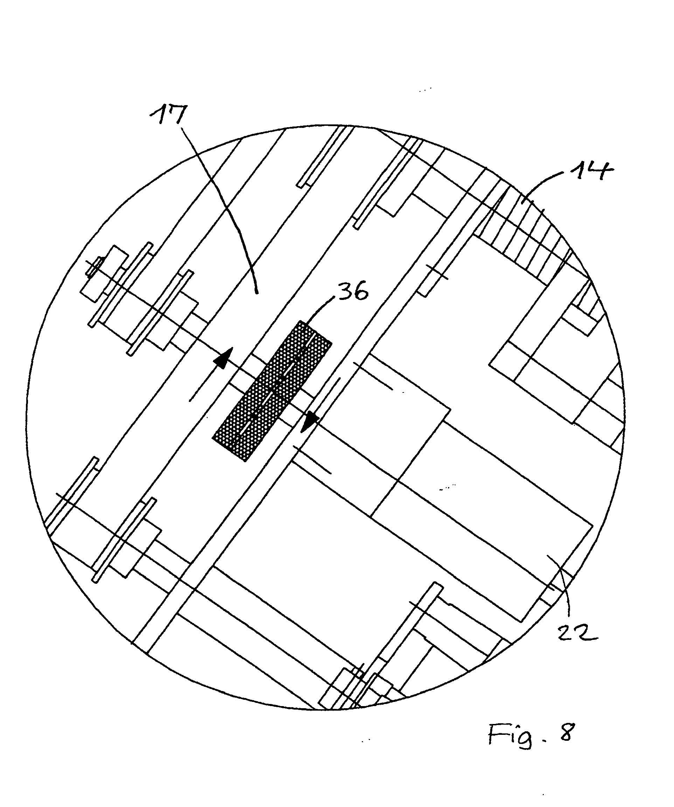

In Fig. 8 ist schließlich eine Meßzelle 36 dargestellt, mit der das Drehmoment der Mischantriebswelle 23 gemessen wird.

Die Meßsensoren der Fig. 3 bis 8 sind dabei auf nicht gezeigte Weise mit der zentralen Elektronik 30 verbunden, um so Signale über das Auspreßverhalten an die Einheit 30 abzugeben, die dann die Regelung der Antriebsgeschwindigkeiten der Motoren 15 und 22 bewirkt.

## Patentansprüche

1. Verfahren zum Erzeugen einer Mehrkomponentenmasse, insbesondere für Dentalzwecke, durch Auspressen ihrer Komponenten aus nebeneinander angeordneten, austauschbaren Kartuschen, die in einem Mischer münden, durch gemeinsamen Vorschub ihrer Kolben mittels eines Elektroantriebs, bei dem Messwerte des Auspressverhaltens mit Sensoren bestimmt werden und die Vorschubgeschwindigkeit geregelt wird, **dadurch gekennzeichnet, dass** die Messwerte mit entsprechenden gespeicherten oder berechneten Werten für bekannte Materialien verglichen werden, aufgrund dieses Vergleichs das Material identifiziert und die Vorschubgeschwindigkeit auf den für dieses Material geeigneten Wert eingestellt wird.

2. Verfahren nach Anspruch 1, **dadurch gekennzeichnet, daß** die Stromaufnahme oder das Drehmoment des Elektroantriebs für den Vorschub gemessen wird.

3. Verfahren nach einem der Ansprüche 1 oder 2, **dadurch gekennzeichnet, daß** der Auspressdruck einer oder aller Komponenten gemessen wird.

4. Verfahren nach einem der Ansprüche 2 oder 3, **dadurch gekennzeichnet, daß** die Vorschubgeschwindigkeit gemessen wird.

5. Verfahren nach einem der Ansprüche 1 bis 4, **dadurch gekennzeichnet, daß** die Verformung einer oder aller Kartuschen gemessen wird.

6. Verfahren nach einem der Ansprüche 1 bis 5, **dadurch gekennzeichnet, daß** die Verformung der Kartuschenaufnahme gemessen wird.

7. Verfahren nach einem der Ansprüche 1 bis 6, **dadurch gekennzeichnet, daß** die Komponenten mit einem mit einem Elektromotor angetriebenen Mischer gemischt werden und die Stromaufnahme oder das Drehmoment dieses Elektromotors gemessen wird.

8. Verfahren nach Anspruch 7, **dadurch gekennzeichnet, daß** die Umdrehungsgeschwindigkeit des Elektromotors für den Mischer geregelt wird.

9. Verfahren nach einem der Ansprüche 1 bis 8, **dadurch gekennzeichnet, daß** die Temperatur einer oder aller Komponenten gemessen wird.

10. Vorrichtung zum Erzeugen einer Mehrkomponentenmasse, insbesondere für Dentalzwecke, durch Auspressen und Mischen ihrer Komponenten aus Kartuschen (5), die in einem Mischer (10) münden und austauschbar in dem Gerät angeordnet sind, das einen Elektromotor (15) für den gemeinsamen Vorschub der den Kartuschen (5) zugeordneten Kolben und Sensoren (III bis VIII) für Messwerte des Auspressverhaltens aufweist, wobei die Vorschubgeschwindigkeit geregelt wird, **dadurch gekennzeichnet, daß** sie Speichereinrichtungen (30) zum Speichern des Auspreßverhaltens bekannter Materialen und der mit den Sensoren (III bis VIII) bestimmten Messwerte bekannter Materialien, Vergleichs- und Recheneinrichtungen (30) für gespeicherte und gemessene Messwerte zum Identifizieren des Materials aufgrund des Vergleichs und Regeleinrichtungen (30) zum Regeln der Vorschubsgeschwindigkeit auf den für dieses Material geeigneten Wert aufweist.

11. Vorrichtung nach Anspruch 10, **dadurch gekennzeichnet, daß** sie Einrichtungen zum Messen der Stromaufnahme oder des Drehmoments (37) des Elektroantriebs (15) für den Vorschub aufweist.

12. Vorrichtung nach einem der Ansprüche 10 oder 11, **dadurch gekennzeichnet, daß** sie Einrichtungen (34) zum Messen des Auspressdrucks einer oder aller Komponenten aufweist.

13. Vorrichtung nach einem der Ansprüche 10 bis 12, **dadurch gekennzeichnet, daß** sie Einrichtung zum Messen der Vorschubgeschwindigkeit (32, 33) aufweist.

14. Vorrichtung nach einem der Ansprüche 10 bis 13, **dadurch gekennzeichnet, daß** sie Einrichtungen (34) zum Messen der Verformung einer oder aller Kartuschen aufweist.

15. Vorrichtung nach einem der Ansprüche 10 bis 14, **dadurch gekennzeichnet, daß** sie Einrichtungen zum Messen der Verformung der Kartuschenaufnahme aufweist.

16. Vorrichtung nach einem der Ansprüche 10 bis 15, **dadurch gekennzeichnet, daß** sie einen mit einem Elektromotor (22) angetriebenen Mischer (10) und Einrichtungen zum Messen der Stromaufnahme oder des Drehmoments (36) des Elektromotors (22) aufweist.

17. Vorrichtung nach einem der Ansprüche 10 bis 16, **dadurch gekennzeichnet, daß** sie Einrichtungen (30) zum Regeln der Umdrehungsgeschwindigkeit des Elektromotors (22) für den Mischer aufweist.

18. Vorrichtung nach einem der Ansprüche 10 bis 17, **dadurch gekennzeichnet, daß** sie Temperaturmesseinrichtungen (31) aufweist.

## Claims

1. Method for generating a multi-component compound, in particular for dental purposes, by pressing its components out from exchangeable cartridges, which are arranged alongside one another and open into a mixer, by jointly advancing their plungers by means of an electric drive, in which measured values of the pressing-out behaviour are determined by sensors and the advance speed is regulated, **characterized in that** the measured values are compared with corresponding stored or calculated values for known materials, the material is identified on the basis of this comparison, and the advance speed is adjusted to the value suitable for this material.

2. Method according to Claim 1, **characterized in that** the current consumption or the torque of the electric drive for the advance is measured.

3. Method according to either of Claims 1 and 2, **characterized in that** the pressing-out pressure of one or all of the components is measured.

4. Method according to either of Claims 2 and 3, **characterized in that** the advance speed is measured.

5. Method according to one of Claims 1 to 4,
**characterized in that** the deformation of one or all of the cartridges is measured.

6. Method according to one of Claims 1 to 5,
**characterized in that** the deformation of the cartridge holder is measured.

7. Method according to one of Claims 1 to 6,
**characterized in that** the components are mixed using a mixer driven by an electric motor, and the current consumption or the torque of this electric motor is measured.

8. Method according to Claim 7, **characterized in that** the speed of rotation of the electric motor for the mixer is regulated.

9. Method according to one of Claims 1 to 8,
**characterized in that** the temperature of one or all of the components is measured.

10. Device for generating a multi-component compound, in particular for dental purposes, by pressing out and mixing its components from cartridges (5), which open into a mixer (10) and are arranged in an exchangeable manner in the apparatus which has an electric motor (15) for the joint advance of the plungers assigned to the cartridges (5) and has sensors (III to VIII) for measured values of the pressing-out behaviour, the advance speed being regulated, **characterized in that** it has storage means (30) for storing the pressing-out behaviour of known materials and the measured values of known materials determined by the sensors (III to VIII), comparing and calculating means (30) for stored and measured values for identification of the material on the basis of the comparison, and regulating means (30) for regulating the advance speed to the value measured for this material.

11. Device according to Claim 10, **characterized in that** it has means for measuring the current consumption or the torque (37) of the electric drive (15) for the advance.

12. Device according to either of Claims 10 and 11, **characterized in that** it has means (34) for measuring the pressing-out pressure of one or all of the components.

13. Device according to one of Claims 10 to 12,
**characterized in that** it has means for measuring the advance speed (32, 33).

14. Device according to one of Claims 10 to 13,
**characterized in that** it has means (34) for measuring the deformation of one or all of the cartridges.

15. Device according to one of Claims 10 to 14,
**characterized in that** it has means for measuring the deformation of the cartridge holder.

16. Device according to one of Claims 10 to 15,
**characterized in that** it has a mixer (10), driven by an electric motor (22), and means for measuring the current consumption or the torque (36) of the electric motor (22).

17. Device according to one of Claims 10 to 16,
**characterized in that** it has means (30) for regulating the speed of rotation of the electric motor (22) for the mixer.

18. Device according to one of Claims 10 to 17,
**characterized in that** it has temperature measurement means (31).

## Revendications

1. Procédé de production d'une masse à plusieurs constituants, en particulier à des fins dentaires, par l'éjection par pressage de ses constituants à partir de cartouches remplaçables disposées l'une à côté de l'autre, qui débouchent dans un mélangeur, par l'avance commune de leurs pistons au moyen d'un entraînement électrique, dans lequel les valeurs de mesure de l'opération d'éjection par pressage sont déterminées à l'aide de capteurs et la vitesse de l'avance est réglée, **caractérisé en ce que** les valeurs de mesure sont comparées à des valeurs enregistrées ou calculées correspondantes pour des matériaux connus, le matériau est identifié sur la base de cette comparaison et la vitesse de l'avance est réglée à la valeur appropriée pour ce matériau.

2. Procédé selon la revendication 1, **caractérisé en ce que** la consommation de courant ou le couple de rotation de l'entraînement électrique sont mesurés pour l'avance.

3. Procédé selon l'une quelconque des revendications 1 ou 2, **caractérisé en ce que** la pression d'éjection de l'un ou de la totalité des constituants est mesurée.

4. Procédé selon l'une quelconque des revendications 2 ou 3, **caractérisé en ce que** la vitesse de l'avance est mesurée.

5. Procédé selon l'une quelconque des revendications 1 à 4, **caractérisé en ce que** la déformation de l'une ou de la totalité des cartouches est mesurée.

6. Procédé selon l'une quelconque des revendications 1 à 5, **caractérisé en ce que** la déformation de la capacité des cartouches est mesurée.

7. Procédé selon l'une quelconque des revendications 1 à 6, **caractérisé en ce que** les constituants sont mélangés à l'aide d'un mélangeur entraîné par un moteur électrique et la consommation de courant ou le couple de rotation de ce moteur électrique sont mesurés.

8. Procédé selon la revendication 7, **caractérisé en ce que** la vitesse de rotation du moteur électrique du mélangeur est réglée.

9. Procédé selon l'une quelconque des revendications 1 à 8, **caractérisé en ce que** la température de l'un ou de la totalité des constituants est mesurée.

10. Dispositif de production d'une masse à plusieurs constituants, en particulier à des fins dentaires, par l'éjection par pressage et le mélange de ses constituants à partir de cartouches (5), qui débouchent dans un mélangeur (10) et sont disposées de façon remplaçable dans l'appareil, qui présente un moteur électrique (15) pour l'avance commune des pistons adjoints aux cartouches (5) et des capteurs (III à VIII) pour les valeurs de mesure de l'opération d'éjection par pressage,où la vitesse de l'avance est réglée, **caractérisé en ce qu'**il présente des dispositifs de mémoire (30) pour l'enregistrement de l'opération d'éjection par pressage de matériaux connus et des valeurs de mesure des matériaux connus déterminées à l'aide des capteurs (III à VIII), des dispositifs de comparaison et de calcul (30) pour les valeurs de mesure enregistrées et mesurées aux fins de l'identification du matériau sur la base de la comparaison, et des dispositifs de réglage (30) aux fins du réglage de la vitesse d'avance à la valeur appropriée pour ce matériau.

11. Dispositif selon la revendication 10, **caractérisé en ce qu'**il présente des dispositifs destinés à mesurer la consommation de courant ou le couple (37) de l'entraînement électrique (15) pour l'avance.

12. Dispositif selon l'une quelconque des revendications 10 ou 11, **caractérisé en ce qu'**il présente des dispositifs (34) destinés à mesurer la pression d'éjection de l'un ou de la totalité des constituants.

13. Dispositif selon l'une quelconque des revendications 10 à 12, **caractérisé en ce qu'**il présente un dispositif destiné à mesure la vitesse de l'avance (32, 33).

14. Dispositif selon l'une quelconque des revendications 10 à 13, **caractérisé en ce qu'**il présente des dispositifs (34) destinés à mesurer la déformation de l'une ou de la totalité des cartouches.

15. Dispositif selon l'une quelconque des revendications 10 à 14, **caractérisé en ce qu'**il présente des dispositifs destinés à mesurer la déformation de la capacité des cartouches.

16. Dispositif selon l'une quelconque des revendications 10 à 15, **caractérisé en ce qu'**il présente un mélangeur (10) entraîné par un moteur électrique (22) et des dispositifs destinés à mesurer la consommation de courant ou le couple (36) du moteur électrique (22).

17. Dispositif selon l'une quelconque des revendications 10 à 16, **caractérisé en ce qu'**il présente des dispositifs (30) destinés à régler la vitesse de rotation du moteur électrique (22) pour le mélangeur.

18. Dispositif selon l'une quelconque des revendications 10 à 17, **caractérisé en ce qu'**il présente des dispositifs de mesure de température (31).
